# EUROPEAN PATENT APPLICATION

(11) **EP 1 585 120 A1**
(43) Date of publication of application: **12.10.2005**
(21) Application number: 04008548.2
(22) Date of filing: 08.04.2004
(51) Int. Cl.: G11B 7/135

(54) **Miniaturized optical pickup**

(71) Applicant: DEUTSCHE THOMSON-BRANDT GMBH, 78048 Villingen-Schwenningen (DE)
(72) Inventor: Knittel, Joachim, 78052 Villingen-Schwenningen (DE)
(74) Representative: Thies, Stephan

(57) **Abstract**

The present invention relates to a miniaturized optical pickup, and to an apparatus for reading from and/or writing to optical recording media using such miniaturized optical pickup.

It is an object of the invention to propose a new design for a miniaturized optical pickup.

According to the invention an optical pickup including a laser diode (1) having a laser cavity (2), and a photo detector (7) placed behind the laser cavity (2), wherein a light beam emitted by the laser diode (1) and reflected by an optical recording medium (5) is transmitted back through the laser cavity (2) and impinges on the photo detector (7), further includes a polarization rotating element (9) placed between the laser diode (1) and the optical recording medium (5) such that the direction of polarization of the reflected light beam is perpendicular to the direction of polarization of the light beam emitted by the laser diode (1).

## Description

The present invention relates to a miniaturized optical pickup, and to an apparatus for reading from and/or writing to optical recording media using such miniaturized optical pickup.

Miniaturized optical disk drives are very attractive for mobile products such as digital cameras. In order to miniaturize an optical disk drive, it is necessary to reduce the size of the optical pickup used in such a disk drive.

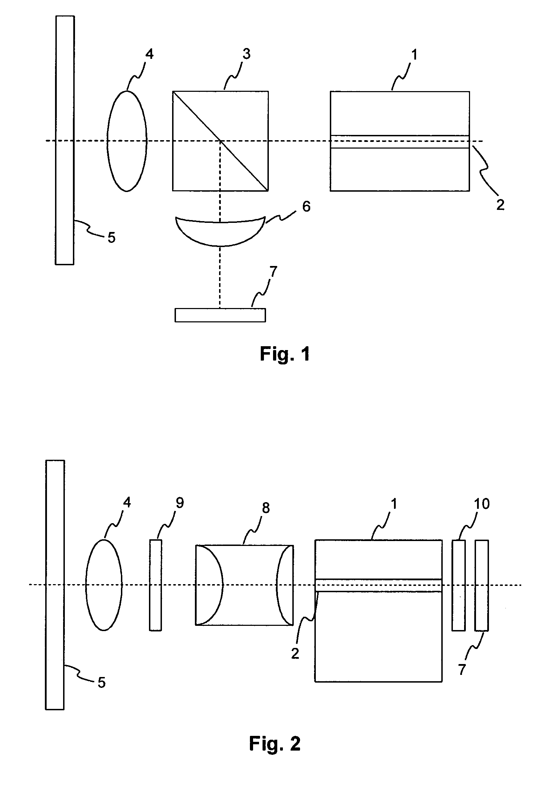

A conventional optical pickup is illustrated in Fig. 1. A laser diode 1 having a laser cavity 2 generates a light beam, which passes through a beam splitter 3 and is focused on an optical recording medium 5 by an objective lens 4. The light beam reflected by the optical recording medium 5 passes again through the objective lens 4 and is at least partially deflected by the beam splitter 3. The deflected light beam is then focused onto a four-element photo detector 7 by an astigmatic focusing lens 6 to generate a focus error signal using the astigmatism method and a tracking error signal using the push-pull method. This conventional optical pickup has the disadvantage that the beam path between the beam splitter 3 and the photo detector 7 needs additional space and impedes miniaturization.

In "Spatial filtering by laser detection in confocal microscopy", Optics Letters Vol. 18 (1993), pp. 1135-1137, Juskaitis et al. present the idea to send radiation reflected from a specimen back through the laser cavity. The resulting signal is detected by using the feedback effects that are caused by the interference of the returning light and the laser.

It is an object of the invention to propose an alternative design for a miniaturized optical pickup.

According to the invention this object is achieved by an optical pickup including a laser diode having a laser cavity, and a photo detector placed behind the laser cavity, wherein a light beam emitted by the laser diode and reflected by an optical recording medium is transmitted back through the laser cavity and impinges on the photo detector, wherein the optical pickup further includes a polarization rotating element placed between the laser diode and the optical recording medium such that the direction of polarization of the reflected light beam is perpendicular to the direction of polarization of the light beam emitted by the laser diode. While in the prior art the feedback effects that are caused by the interference of the returning light beam and the laser diode are used for signal detection this feedback is suppressed by introducing a polarization rotating element, e.g. a quarter wave plate. Instead, the transmitted light is measured directly with the detector placed behind the laser diode. The proposed new design requires a minimum of optical components, as the beam splitter can be saved. All the components are aligned along a single (optical) axis. By stacking all optical components a very compact pickup can be build.

Favourably, a beam-shaping element is introduced in the beam path between the laser diode and the optical recording medium. For the light beam emitted by the laser diode the beam-shaping element is used, as usual, to modify the intensity distribution of the light beam. For the light beam reflected by the optical recording medium the beam-shaping element replaces the astigmatic focus lens, as beam-shapers introduce strong astigmatism provided that the light beam is defocused. This has the advantage that no additional astigmatic focusing lens is needed for generating the focus error signal.

Alternatively, a polarizing, astigmatic focusing lens is placed in the beam path between the laser diode and the optical recording medium to modify the light beam returning from the optical recording medium in such a way that it allows the generation of a focus and a track error signal with a suitable detector pattern. A suitable detector pattern is, for example, a four-element photo detector. The polarizing, astigmatic focusing lens favourably is a double refractive lens. When the polarizing, astigmatic focusing lens is placed close to the objective lens the total length of the detection path is reduced to a minimum

Favourably, a linear polarizer is placed between the laser diode and the photo detector. This linear polarizer blocks the light that is emitted by the laser diode, but transmits the light beam returning from the optical recording medium. In this way only the light reflected from the optical recording medium is detected by the photo detector.

For a better understanding of the invention, exemplary embodiments are specified in the following description with reference to the figures. It is understood that the invention is not limited to these exemplary embodiments and that specified features can also expediently be combined and/or modified without departing from the scope of the present invention. In the figures:
- Fig. 1: shows the optical layout of a conventional optical pickup;
- Fig. 2: depicts the optical layout of a miniaturized optical pickup according to the invention;
- Fig. 3: illustrates a further optical layout of a miniaturized optical pickup; and
- Fig. 4: depicts a conventional optical pickup with reduced size.

Fig. 2 shows the optical layout of the proposed optical pickup. A linear polarized light beam emitted by a laser diode 1 is shaped by a beam shaper 8, transmitted through a quarter wave plate 9 and focused on an optical recording medium 5 by an objective lens 4. The light beam reflected by the optical recording medium 5 passes again through the objective lens 4, the quarter wave plate 9 and the beam shaper 8. The light beam is then transmitted through the laser cavity 2 and reaches a four-element photo detector 7 to generate a tracking error signal using the push-pull method and a focus error signal using the astigmatism method. Due to the quarter wave plate 9 the direction of polarization of the returning light beam is rotated by 90° relative to the direction of polarization of the light beam emitted by the laser diode 1. This reduces the coupling between the radiation generated in the laser cavity 2 and the returning light beam thereby reducing the laser noise. A linear polarizer 10 between the laser diode 1 and the photo detector 7 blocks the light that is emitted by the laser diode 1, but transmits the light beam returning from the optical recording medium 5. If the light beam returning from the optical recording medium 5 is slightly defocused, the beam shaper 8 introduces astigmatism and produces an elliptically shaped focus spot on the photo detector 7, which may be used to generate the focus error signal. Of course, instead of the beam shaper 8 and additional astigmatic focusing lens 6 may also be used for producing the elliptically shaped focus spot

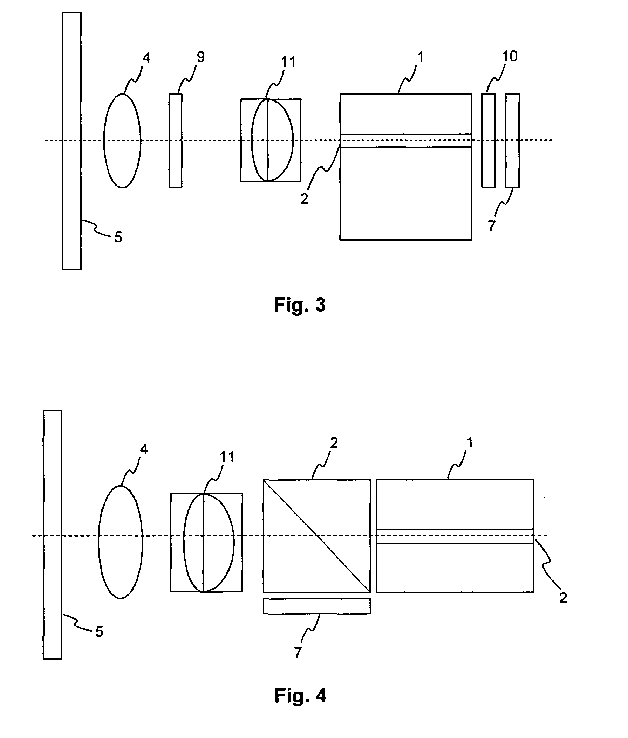

Fig. 3 depicts an optical pickup which is similar to the one shown in Fig. 2, but where the beam shaper 8 is replaced by a polarizing, astigmatic focusing lens 11. This polarizing, astigmatic focusing lens 11 modifies the light beam returning from the optical recording medium 5 in such a way that it allows the generation of a focus and a track error signal with a suitable detector pattern, i.e. a four-element photo detector 7. This polarizing, astigmatic focusing lens 11 may, for example, be made of a bi-refractive material with the following design: for a p-polarized light beam the lens 11 acts like a flat lens and for an s-polarized light beam it acts like an astigmatic lens.

The above described polarizing, astigmatic focusing lens 11 can also be used to miniaturize a conventional pickup, as illustrated in Fig. 4. In this figure the polarizing, astigmatic focusing lens 11 is placed close to the objective lens 4. In this way the additional optical path between the astigmatic lens 6 and the photo detector 7 as in Fig. 1 is avoided, i.e. the photo detector 7 is placed close to the beam splitter 3. A similar reduction of the optical path is also achieved, in addition to a beam-shaping effect, by replacing the polarizing, astigmatic focusing lens 11 with the beam shaper 8 of Fig 2.

## Claims

1. Optical pickup including a laser diode (1) having a laser cavity (2), and a photo detector (7) placed behind the laser cavity (2), wherein a light beam emitted by the laser diode (1) and reflected by an optical recording medium (5) is transmitted back through the laser cavity (2) and impinges on the photo detector (7), **characterized in that** the optical pickup further includes a polarization rotating element (9) placed between the laser diode (1) and the optical recording medium (5) such that the direction of polarization of the reflected light beam is perpendicular to the direction of polarization of the light beam emitted by the laser diode (1).

2. Optical pickup according to claim 1, further including a beam-shaping element (8) in the beam path between the laser diode (1) and the optical recording medium (5).

3. Optical pickup according to claim 1, further including a polarizing, astigmatic focusing lens (11) in the beam path between the laser diode (1) and the optical recording medium (5) to modify the light beam returning from the optical recording medium (5) in such a way that it allows the generation of a focus and a track error signal with a suitable detector pattern.

4. Optical pickup according to one of claims 1 to 3, wherein a linear polarizer (10) is placed between the laser diode (1) and the photo detector (7).

5. Apparatus for reading from and/or writing to optical recording media, **characterized in that** it includes an optical pickup according to one of claims 1 to 4.
